# DEMANDE DE BREVET EUROPEEN

(11) **EP 4 420 913 A1**
(43) Date de publication de la demande: **28.08.2024**
(21) Numéro de dépôt: 23215024.3
(22) Date de dépôt: 07.12.2023
(51) Int. Cl.: B60K 35/00, G06F 3/038, B60K 35/10, B60K 35/29, G10L 15/22

(54) **SYSTÈME DE COMMANDE AVEC DÉTECTION DE CHANGEMENT D ÉTAT ET INTERPRÉTATION MULTIMODALE**

(30) Priorité: 09.12.2022 FR 2213061
(71) Demandeur: Dassault Aviation, 75008 Paris (FR)
(72) Inventeur: DARGENT, Lauren, 92214 SAINT-CLOUD (FR); GIROD, Hervé, 92214 SAINT-CLOUD (FR); RICHARD, Valentin, 92214 SAINT-CLOUD (FR)
(74) Mandataire: Lavoix

(57) **Abrégé**

La présente invention concerne un système de commande (14) comprenant :
- un module de détection (32) de changement d'état modal configuré pour recevoir des entrées modales distinctes ; le module de détection étant configuré pour détecter un changement d'état discret de chaque entrée modale et pour déterminer des données caractéristiques de l'état discret en cours ; le module de détection étant aussi configuré pour détecter une requête de l'utilisateur ;
- un module d'interprétation multimodale (34) configuré, à chaque changement d'état détecté, pour stocker et mettre à jour les données caractéristiques de l'état discret en cours de l'entrée modale suite au changement d'état détecté ; le module d'interprétation multimodale étant configuré, à chaque requête détectée incomplète, pour compléter la requête incomplète à partir des données caractéristiques à jour stockées de l'état discret en cours d'une autre entrée modale.

## Description

La présente invention concerne un système de commande basé sur des interactions multimodales d'un utilisateur.

L'utilisateur, un pilote d'aéronef par exemple, peut interagir avec un système par l'intermédiaire de différent moyens de communication faisant intervenir différentes modalités, chaque modalité étant relative à un sens humain avec lequel l'utilisateur peut communiquer, tel que la parole, la vue, le toucher, ou le mouvement.

Lorsque l'utilisateur émet une requête par l'intermédiaire d'une première modalité, telle qu'un dispositif de reconnaissance vocale, il est connu de gérer certaines modalités par le biais d'une fenêtre temporelle d'évènements. Cette fenêtre temporelle permet une corrélation temporelle entre les entrées/évènements des différentes modalités, en particulier dans le cas de modalités qui fournissent des états continus comme par exemple le déplacement d'un curseur ou une direction de regard.

Cependant, ces mécanismes connus de gestion des modalités ne sont pas satisfaisants, en particulier dans la mesure où ils nécessitent une définition très complexe de la fenêtre temporelle pour les modalités.

De plus, certains mécanismes connus ne gèrent qu'un nombre limité de modalités, typiquement uniquement la parole et le toucher, et ne sont pas adaptables à d'autres modalités.

Un but de l'invention est donc de fournir un système de commande permettant de gérer au moins deux entrées modales générées à partir d'une même modalité ou à partir respectivement d'au moins deux modalités distinctes génériques et permettant de gérer de manière simple des requêtes provenant d'un utilisateur.

Un but additionnel de l'invention est de fournir une architecture de multimodalité pouvant gérer en entrée autant de modalités différentes que nécessaires, de façon générique.

A cet effet, l'invention porte sur un système de commande comprenant :
- un module de détection de changement d'état modal configuré pour recevoir au moins deux entrées modales distinctes, chaque entrée modale étant générée à partir d'une même modalité ou à partir respectivement d'au moins deux modalités distinctes ;
   le module de détection étant configuré, pour chaque entrée modale reçue, pour détecter un changement d'état discret de l'entrée modale depuis un état discret précédemment attribué vers un état discret en cours nouvellement attribué à l'entrée modale et pour déterminer des données caractéristiques de l'état discret en cours de l'entrée modale suite au changement d'état détecté ;
   le module de détection étant aussi configuré pour détecter une requête de l'utilisateur à partir d'au moins une des entrées modales reçues ;
- un module d'interprétation multimodale configuré, à chaque changement d'état détecté d'une des entrées modales, pour stocker et mettre à jour les données caractéristiques de l'état discret en cours de l'entrée modale suite au changement d'état détecté ;
le module d'interprétation multimodale étant aussi configuré, à chaque requête de l'utilisateur détectée, pour déterminer si ladite requête est suffisamment complète pour être mise en oeuvre, et, en cas de requête incomplète, pour compléter la requête incomplète à partir d'au moins une des données caractéristiques à jour stockées de l'état discret en cours d'une autre entrée modale distincte de chaque entrée modale à partir de laquelle la requête a été détectée.

Le système selon l'invention peut comprendre l'une ou plusieurs des caractéristiques suivantes, prise(s) isolément ou suivant toute combinaison techniquement possible :
- au moins deux des entrées modales distinctes sont générées respectivement par des modalités distinctes, le module d'interprétation multimodale étant configuré, en cas de requête incomplète, pour compléter la requête intentionnelle incomplète à partir d'au moins une des données caractéristiques à jour stockées de l'état discret en cours de l'entrée modale générée par une autre modalité, l'autre modalité étant distincte de chaque modalité ayant généré l'entrée modale à partir de laquelle la requête intentionnelle a été détectée ;
- chaque changement d'état discret est détecté en fonction d'au moins un critère de détection ; et, de préférence, l'état discret en cours nouvellement attribué est choisi dans une liste d'au moins deux états discrets possibles ; chaque critère de détection et chaque état discret possible étant avantageusement stockés sur un fichier configurable de manière externe par un opérateur ;
- le module d'interprétation multimodale est configuré, en cas de requête incomplète, pour compléter la requête incomplète uniquement à partir d'une ou de donnée(s) caractéristique(s) à jour stockée(s) d'un ou d'état(s) discret(s) en cours ;
- au moins une des entrées modales est continue, l'entrée modale continue ayant une évolution continue au cours du temps, le module de détection étant de préférence configuré pour détecter un changement d'état discret de l'entrée modale continue en fonction d'un degré de variation en cours de l'entrée modale continue, le module de détection étant avantageusement configuré pour détecter un changement d'état discret de l'entrée modale continue au moins si la variation de l'entrée modale continue reste en dessous d'un seuil prédéterminé de variation pendant une durée minimale prédéterminée, par exemple au moins si la variation est nulle pendant ladite durée minimale prédéterminée ;
- au moins une des entrées modales est discrète, l'entrée modale discrète ayant une évolution discrète au cours du temps, le module de détection étant configuré pour détecter un changement d'état discret de l'entrée modale discrète à chaque variation de l'entrée modale discrète ;
- le module de détection est configuré pour détecter une requête de l'utilisateur à partir d'au moins un changement d'état discret d'une des entrées modales reçues ; et, de préférence, le module de détection comprend une base de données de requêtes et de conditions de déclenchement associées, chaque condition de déclenchement portant sur l'état discret en cours d'au moins une des entrées modales, ladite base de données étant avantageusement stockée sur un fichier configurable de manière externe par un opérateur ;
- le module de détection est en outre configuré pour convertir chaque état discret en cours nouvellement attribué suite à un changement d'état détecté et chaque requête détectée en un vecteur de transmission et pour envoyer ledit vecteur de transmission au module d'interprétation multimodale, chaque vecteur de transmission présentant un même formatage commun à tous les vecteurs de transmission envoyés par le module de détection, ledit formatage commun comportant au moins des champs, le module de détection étant configuré, pour chaque changement d'état détecté, pour remplir le contenu de chaque champ du vecteur de transmission associé en fonction desdites données caractéristiques associées à l'état discret en cours nouvellement attribué suite au changement d'état détecté, le module de détection étant configuré, pour chaque requête détectée, pour remplir le contenu de chaque champ du vecteur de transmission associé en fonction des données caractéristiques associées à l'état discret en cours nouvellement attribué suite à chaque changement d'état détecté à partir duquel a été détecté la requête ;
- les champs comprennent un champ d'identification de requête et au moins un champ essentiel de requête, le contenu du champ d'identification de requête étant représentatif du fait que le vecteur de transmission soit associé à une requête, le module d'interprétation multimodale étant configuré pour déterminer si ladite requête est suffisamment complète pour être mise en oeuvre au moins si un des champs essentiels du vecteur de transmission associé est vide ;
- le module d'interprétation multimodale est configuré, en cas de requête incomplète, pour compléter chaque champ essentiel vide du vecteur de transmission associé à la requête incomplète, chaque champ essentiel vide étant complété à partir du contenu du champ correspondant du vecteur de transmission associé à l'état discret en cours de l'entrée modale générée par ladite autre modalité ;
- le module de détection est configuré pour recevoir au moins trois entrées modales distinctes, le module d'interprétation multimodale étant configuré pour détecter une ambiguïté pour compléter la requête incomplète, l'ambiguïté étant entre les états discrets en cours d'au moins deux autres entrées modales, lesdites autres entrées modales étant distinctes de chaque entrée modale à partir de laquelle la requête incomplète a été détectée, le système comprenant en outre un module de désambiguïsation configuré pour fournir une directive de désambiguïsation au module d'interprétation multimodale en cas d'ambiguïté détectée, le module d'interprétation multimodale étant configuré pour compléter la requête incomplète en fonction de ladite directive de désambiguïsation fournie par le module de désambiguïsation, la directive de désambiguïsation comprenant de préférence un ordre de priorité sur les entrées modales pour compléter la requête ;
- la directive de désambiguïsation comprend une requête de questionnement de l'utilisateur, le module d'interprétation multimodale étant alors configuré pour interroger l'utilisateur en fonction de la requête de questionnement par l'intermédiaire d'une interface homme-machine ;
- le module d'interprétation multimodale est configuré pour détecter une ambiguïté entre les états discrets en cours desdites au moins deux autres entrées modales, au moins lorsque les données caractéristiques à jour stockées desdits états discrets en cours, qui correspondent au même champ essentiel vide, sont contradictoires ;
- la directive de désambiguïsation est stockée sur un fichier configurable de manière externe par un opérateur, le fichier présentant de préférence un format xml ;
- le module de désambiguïsation stocke au moins deux directives de désambiguïsation distinctes, chaque directive de désambiguïsation étant associée à un utilisateur distinct, le module de désambiguïsation étant configuré pour fournir la directive de désambiguïsation en fonction de l'utilisateur à l'origine de la requête incomplète ;
- le système de commande comprend au moins deux modalités distinctes, chaque modalité comprenant un moyen technique d'acquisition d'au moins une information sensorielle associée à l'utilisateur, chaque modalité étant configurée pour générer au moins une entrée modale à partir de l'information sensorielle acquise par le moyen technique d'acquisition, et étant configurée pour envoyer chaque entrée modale générée au module de détection ; et, de préférence, une des modalités est une modalité acoustique, le module de détection étant configuré pour détecter une requête de l'utilisateur à partir d'au moins un changement d'état discret de l'entrée modale générée par la modalité acoustique, et au moins une autre des modalités est choisie parmi une modalité tactile, une modalité optique ou une modalité kinesthésique, et, de préférence au moins encore une autre des modalités est choisie parmi une modalité tactile, une modalité optique ou une modalité kinesthésique ;
- l'utilisateur est un pilote d'un aéronef, par exemple un avion ou un drone ; et
- le module d'interprétation multimodale est configuré pour envoyer des requêtes pour mises en oeuvre, les requêtes n'étant envoyées que si elles sont suffisamment complètes pour être mises en oeuvre.

L'invention concerne également une méthode de commande comprenant les étapes suivantes :
- génération d'au moins deux entrées modales distinctes, chaque entrée modale étant générée à partir d'une même modalité ou à partir respectivement d'au moins deux modalités distinctes
- détection, pour chaque entrée modale, d'un changement d'état discret de l'entrée modale depuis un état discret précédemment attribué vers un état discret en cours nouvellement attribué à l'entrée modale, et détermination de données caractéristiques d'un état discret en cours de l'entrée modale suite au changement d'état détecté ;
- détection d'une requête de l'utilisateur à partir d'au moins une des entrées modales ;

la méthode comprenant, à chaque changement d'état détecté d'une des entrées modales, le stockage et la mise à jour des données caractéristiques de l'état discret en cours de l'entrée modale suite au changement d'état détecté ;
la méthode comprenant, à chaque requête de l'utilisateur détectée, la détermination de si ladite requête est suffisamment complète pour être mise en oeuvre, et, en cas de requête incomplète, la requête incomplète est alors complétée à partir d'au moins une des données caractéristiques à jour stockées de l'état discret en cours d'une autre entrée modale distincte de chaque entrée modale à partir de laquelle la requête a été détectée.

L'invention sera mieux comprise à la lecture de la description qui va suivre, donnée uniquement à titre d'exemple, et faite en se référant aux dessins annexés, sur lequel :
[Fig 1] la figure 1 est un organigramme schématique d'un aéronef comprenant un système de commande selon un exemple de réalisation de l'invention ; et
[Fig 2] la figure 2 est un organigramme schématique d'une méthode de commande selon un exemple de réalisation de l'invention.

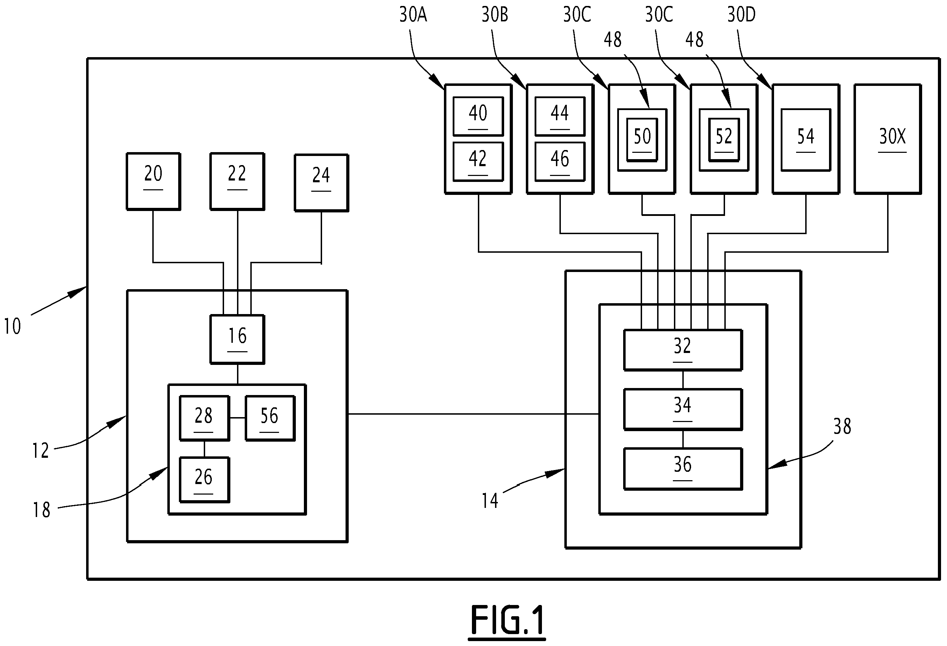

Un exemple d'aéronef 10 est illustré sur la figure 1.

L'aéronef est par exemple un avion ou un drone.

L'aéronef 10 comprend un système central d'avionique 12.

L'aéronef 10 comprend aussi un système de commande 14 à un utilisateur. L'utilisateur est ici par exemple un pilote de l'aéronef 10.

L'aéronef 10 comprend aussi des systèmes fonctionnels incluant par exemple des systèmes 20 de mesure de l'aéronef 10, des systèmes 22 de communication extérieure, et des systèmes 24 d'actionnement des commandes de l'aéronef 10.

Les systèmes de mesure 20 comportent par exemple des composants comprenant des capteurs de mesure de paramètres extérieurs à l'aéronef 10, tels que la température, la pression ou la vitesse, des capteurs de mesure de paramètres internes à l'aéronef 10 et à ses différents systèmes fonctionnels, et des capteurs de positionnement, tels que des capteurs GPS, des centrales à inertie, et/ou un altimètre.

Les systèmes de communication extérieure 22 incluent par exemple des composants comprenant des systèmes radio, VOR/LOC, ADS, DME, ILS, des systèmes radars, et/ou des systèmes de communication par satellite tel que « SATCOM ».

Les systèmes de commande 24 sont propres à commander des paramètres de vol de l'aéronef 10 et des états avioniques de l'aéronef 10.

Les systèmes de commande 24 incluent par exemple des composants comprenant des actionneurs propres à actionner des commandes de l'aéronef 10, tels que des volets, des gouvernes, des pompes, ou encore des circuits mécaniques, électriques ou/et hydrauliques, et des actionneurs logiciels.

Les différents systèmes 20 à 24 sont raccordés au système central d'avionique 12, par exemple de manière numérique, par au moins un bus de données circulant sur un réseau interne à l'aéronef 10.

Le système central d'avionique 12 comporte une unité centrale d'avionique 16 et au moins une unité d'affichage 18, l'unité d'affichage 18 étant par exemple placée dans le cockpit de l'aéronef 10.

Le cockpit de l'aéronef 10 est par exemple situé dans l'aéronef 10 lui-même, ou dans une salle de commande à distance de l'aéronef 10.

L'unité d'affichage 18 comporte un écran 26 et un ensemble de gestion d'affichage 28 sur l'écran 26.

L'ensemble de gestion d'affichage 28 comporte par exemple au moins un processeur, et une mémoire comportant des modules logiciels propres à être exécutés par le processeur pour gérer l'affichage sur l'écran 26.

L'ensemble de gestion d'affichage 28 est configuré pour afficher des éléments graphiques sur l'écran 26, par exemple en fonction d'informations provenant des systèmes de mesure 20 et/ou des systèmes de communication extérieure 22 et/ou des systèmes de commande 24.

Le système de commande 14 est connecté au système central d'avionique 12, au moyen d'une liaison de données.

La liaison de données est par exemple une liaison filaire ou une liaison sans fil.

De manière générale, le système de commande 14 comprend au moins un module 32 de détection de changement d'état modal et un module 34 d'interprétation multimodale.

Le système de commande 14 comprend aussi de préférence un module 36 de désambiguïsation.

Le système de commande 14 comprend avantageusement une unité de traitement 38 incluant lesdits modules 32, 34, 36.

Le système de commande 14 comprend de préférence au moins deux modalités distinctes 30A-30X.

Dans un exemple de réalisation illustré sur la figure 1, le système de commande 14 comprend au moins trois modalités distinctes 30A-30X, de préférence au moins quatre modalités distinctes ou avantageusement un nombre quelconque strictement supérieur à deux de modalités distinctes. En variante non illustrée, le système de commande 14 ne comprend que deux modalités distinctes.

De manière générale, chaque modalité 30A-30X comprend un moyen technique d'acquisition d'au moins une information sensorielle associée à l'utilisateur, et chaque modalité 30A-30X est configurée pour générer au moins une entrée modale à partir de l'information sensorielle acquise par le moyen technique d'acquisition.

Chaque modalité 30A-30X génère une unique entrée modale ou au moins deux entrées modales à partir d'une même information sensorielle acquise par le moyen technique d'acquisition.

Chaque information sensorielle est relative à un sens humain avec lequel l'utilisateur peut communiquer, tel que la parole, la vue, le toucher, le mouvement ou tout autre sens.

Chaque entrée modale générée par chaque modalité 30A-30X évolue au cours du temps, en fonction de l'utilisateur et de ses actions.

Chaque modalité 30A-30X est configurée pour envoyer chaque entrée modale générée au module de détection 32.

De préférence, au moins une des modalités 30A-30X est configurée pour générer au moins une entrée modale continue, l'entrée modale continue ayant une évolution continue au cours du temps.

Par « continue », on entend par exemple que, entre deux états successifs de l'entrée modale, on peut toujours supposer un état intermédiaire.

Dans un exemple de réalisation, au moins une des entrées modales continues présente continuellement une variation au cours du temps. Un exemple d'une telle entrée modale continue sera donné ci-après.

Dans un exemple de réalisation, au moins une des entrées modales continues est propre à présenter une variation nulle pendant une période minimale. Un exemple d'une telle entrée modale continue sera donné ci-après.

De préférence, au moins une des modalités 30A-30X est configurée pour générer au moins une entrée modale discrète, l'entrée modale discrète ayant une évolution discrète au cours du temps.

Le terme « discrète » est ici à comprendre par opposition au terme « continue ».

Par exemple, l'évolution discrète est formée par une succession de paliers.

De manière générale, afin d'acquérir l'information sensorielle et/ou de générer chaque entrée modale, chaque modalité 30A-30X inclut par exemple au moins un dispositif de traitement informatique connecté de manière opérationnelle à une mémoire informatique, par exemple, un processeur de signal numérique (DSP), un microcontrôleur, un réseau de cellules programmables (FPGA) et/ou un circuit intégré dédié (ASIC) capables d'exécuter diverses opérations de traitement de données et de fonctions.

Des exemples plus précis de modalités 30A-30D vont maintenant être décrits. Chacune de ces modalités 30A-30D est séparément et individuellement connue de l'homme du métier.

Lesdites modalités comprennent ainsi de préférence au moins une modalité acoustique 30A, et/ou au moins une modalité optique 30B, et/ou au moins une modalité tactile 30C, et/ou au moins une modalité kinesthésique 30D.

Par exemple, lesdites modalités comprennent au moins une modalité acoustique 30A, au moins une modalité optique 30B, et au moins une modalité tactile 30C.

Dans l'exemple illustré sur la figure 1, lesdites modalités comprennent au moins une modalité acoustique 30A, au moins une modalité optique 30B, et au moins deux modalités tactile 30C distinctes.

Dans le cadre de l'invention, le système de commande 14 peut comprendre plusieurs modalités distinctes du même type ou tout autre modalité 30X envisageable par l'homme du métier.

Chaque modalité acoustique 30A est configurée pour acquérir une information acoustique provenant de l'utilisateur et pour générer au moins une entrée modale audio à partir de l'information acoustique acquise.

Pour ce faire, le moyen technique d'acquisition de chaque modalité acoustique 30A est un dispositif d'acquisition acoustique 40.

Chaque modalité acoustique 30A comprend aussi un dispositif d'analyse audio 42.

Le dispositif d'acquisition acoustique 40 est configuré pour acquérir ladite information acoustique provenant de l'utilisateur.

L'information acoustique comprend par exemple des ondes sonores, des ondes ultrasonores, d'autres vibrations, et/ou toute combinaison de ces ondes.

Le dispositif d'acquisition acoustique 40 comprend par exemple au moins un microphone et/ou tout autre dispositif apte à acquérir des informations acoustiques.

Le dispositif d'analyse audio 42 est configuré pour convertir l'information acoustique acquise en ladite entrée modale audio.

Le dispositif d'analyse audio 42 est de préférence configuré pour utiliser une technologie de reconnaissance vocale, par exemple par reconnaissance automatique de la parole, plus couramment appelé RAP (ou ASR en anglais). Une telle technologie est connue de l'homme du métier et ne sera pas décrite plus en détails ici.

Le dispositif d'analyse audio 42 est configuré pour détecter et identifier différents sons utilisateurs dans l'information acoustique acquise.

Les sons utilisateurs peuvent inclure des sons phonétiques (par exemple des mots, des phrases), des sons émotionnels (par exemple des rires, des pleurs), des sons musicaux (par exemple des applaudissements, des bourdonnements), d'autres sons et/ou toute combinaison de ces sons. De préférence, les sons utilisateurs incluent des mots.

L'entrée modale audio est par exemple représentative des sons utilisateurs, détectés et identifiés par le dispositif d'analyse audio 42, ou de l'absence de son de l'utilisateur.

Chaque modalité optique 30B est configurée pour acquérir une information optique provenant de l'utilisateur et pour générer au moins une entrée modale optique à partir de l'information optique acquise.

Pour ce faire, le moyen technique d'acquisition de chaque modalité optique 30B est un dispositif d'acquisition optique 44.

Chaque modalité optique 30B comprend aussi un dispositif d'analyse optique 46.

Le dispositif d'acquisition optique 44 est configuré pour acquérir ladite information optique provenant de l'utilisateur.

L'information optique comprend par exemple un rayonnement électromagnétique appartenant à au moins une partie du spectre électromagnétique.

Ladite partie du spectre électromagnétique inclut par exemple au moins une partie du spectre de lumière visible, et/ou au moins une partie du spectre infrarouge, et/ou au moins une partie du spectre ultraviolet.

Le dispositif d'acquisition optique 44 comprend par exemple au moins une caméra, un scanner, un capteur de lumière, tout autre dispositif apte à acquérir l'information optique et/ou toute combinaison de ces éléments.

Le dispositif d'analyse optique 46 est configuré pour convertir l'information optique acquise en ladite entrée modale optique.

Le dispositif d'analyse optique 46 est de préférence configuré pour utiliser une technologie de vision par ordinateur. Une telle technologie est connue de l'homme du métier et ne sera pas décrite plus en détails ici.

Le dispositif d'analyse optique 46 est configuré pour détecter, à partir de l'information optique acquise, un mouvement, une absence de mouvement, une orientation spatiale, un emplacement spatial, et/ou toute combinaison de ces informations, d'au moins une partie du corps de l'utilisateur.

Les parties du corps de l'utilisateur comprennent par exemple une main, une tête, un visage, un oeil, une bouche, tout autre partie du corps de l'utilisateur et/ou toute combinaison de ces parties.

Les mouvements de la partie du corps peuvent être utilisés pour communiquer et peuvent inclure des mouvements de la main (par exemple gestes, langage des signes), des mouvements de la tête (par exemple hocher la tête), des mouvements du visage (par exemple sourire), des mouvements des yeux (par exemple cligner des yeux, regarder dans une direction précise), des mouvements de la bouche (par exemple la lecture labiale), d'autres mouvements et/ou toute combinaison de ces mouvements.

Dans un exemple préféré de réalisation, l'entrée modale optique est représentative d'une zone pointée par au moins une partie du corps de l'utilisateur. Par exemple, la zone pointée est une zone d'un afficheur, par exemple une zone de l'écran 26 de l'unité d'affichage du système central d'avionique 12.

L'entrée modale optique est alors dans cet exemple continue, et présente par exemple continuellement une variation au cours du temps.

En effet, les parties du corps de l'utilisateur (comme les yeux) présentent continuellement des mouvements.

Dans un exemple de réalisation, le dispositif d'acquisition optique 44 et le dispositif d'analyse optique 46 de la modalité optique 30B forment un dispositif de suivi de regard (« Eye tracker » en anglais). La partie du corps est alors un oeil de l'utilisateur, et ladite zone pointée est la zone regardée par l'œil.

L'entrée modale optique inclut par exemple un format bidimensionnel ou tridimensionnel. Chaque entrée modale optique comprend par exemple au moins deux paramètres de positionnement de la zone pointée qui varient au cours du temps.

Chaque modalité tactile 30C est configurée pour acquérir une information tactile provenant de l'utilisateur et pour générer au moins une entrée modale tactile à partir de l'information tactile acquise.

Pour ce faire, le moyen technique d'acquisition de chaque modalité tactile 30C est un dispositif d'acquisition tactile 48.

Chaque modalité tactile 30C comprend aussi un dispositif d'analyse tactile.

Chaque dispositif d'acquisition tactile 48 est configuré pour acquérir ladite information tactile provenant de l'utilisateur.

Au moins un des dispositifs d'acquisition tactile 48 est par exemple inclus dans une interface homme machine du système centrale avionique 12.

Chaque dispositif d'acquisition tactile 48 comprend par exemple un clavier, un bouton poussoir, et/ou un dispositif de pointage et/ou toute combinaison de ces éléments.

Chaque clavier comprend au moins une touche, par exemple matérielle ou logicielle.

Chaque dispositif de pointage comprend par exemple une souris d'ordinateur, une manette 50 comme par exemple un joystick, un pavé tactile, et/ou un écran tactile 52, et/ou toute combinaison de ces éléments.

Dans le cas d'une modalité tactile 30C comprenant un clavier ou un bouton poussoir, l'entrée modale tactile est par exemple discrète.

Dans l'exemple de la figure 1, le système de commande 14 comprend deux modalités tactiles 30C distinctes. Le dispositif d'acquisition tactile 48 d'une première modalité tactile 30C comprend une manette 50 et le dispositif d'acquisition tactile 48 d'une deuxième modalité tactile 30C comprend un écran tactile 52.

Le dispositif d'analyse tactile est configuré pour convertir l'information tactile acquise en ladite entrée modale tactile.

Dans le cas d'une modalité tactile 30C dans laquelle le dispositif d'acquisition tactile 48 comprend un dispositif de pointage (comme la manette 50 ou l'écran tactile 52 de la figure 1), l'entrée modale tactile est représentative d'une zone pointée par l'utilisateur. Par exemple, la zone pointée est une zone d'un afficheur, par exemple une zone de l'écran 26 de l'unité d'affichage du système central d'avionique 12.

L'entrée modale tactile est alors dans cet exemple continue.

L'entrée modale tactile inclut par exemple un format bidimensionnel ou tridimensionnel. Chaque entrée modale tactile comprend par exemple au moins deux paramètres de positionnement de la zone pointée qui varient au cours du temps.

Chaque modalité kinesthésique 30D est configurée pour acquérir une information kinesthésique provenant de l'utilisateur et pour générer au moins une entrée modale kinesthésique à partir de l'information kinesthésique acquise.

Pour ce faire, le moyen technique d'acquisition de chaque modalité kinesthésique 30D est un dispositif d'acquisition kinesthésique 54.

Chaque modalité kinesthésique 30D comprend aussi un dispositif d'analyse kinesthésique.

Chaque dispositif d'acquisition kinesthésique 54 est configuré pour acquérir une information kinesthésique provenant de l'utilisateur.

L'information kinesthésique comprend par exemple un mouvement, une absence de mouvement, une orientation spatiale, un emplacement spatial, et/ou toute combinaison de ces informations d'au moins une partie du corps de l'utilisateur.

Les parties du corps de l'utilisateur comprennent par exemple une main, une tête, un visage, une bouche, tout autre partie du corps de l'utilisateur et/ou toute combinaison de ces parties.

Chaque dispositif d'acquisition kinesthésique 54 comprend par exemple au moins un accéléromètre, un gyroscope, un détecteur de proximité, et/ou toute combinaison de ces éléments.

Le dispositif d'analyse kinesthésique est configuré pour convertir l'information kinesthésique acquise en ladite entrée modale kinesthésique.

Ainsi, l'entrée modale kinesthésique est par exemple similaire à ce qui est décrit ci-dessus pour l'entrée modale optique. La modalité kinesthésique 30D diffère de la modalité optique 30B en ce que les moyens techniques d'acquisition mis en oeuvre sont distincts.

L'unité de traitement 38 comprend par exemple un dispositif de traitement informatique connecté de manière opérationnelle à une mémoire informatique, par exemple, un processeur de signal numérique (DSP), un microcontrôleur, un réseau de cellules programmables (FPGA) et/ou un circuit intégré dédié (ASIC) capables d'exécuter diverses opérations de traitement de données et de fonctions, en particulier capables d'exécuter au moins les fonctions des modules décrits par la suite.

Le dispositif de traitement informatique comprend par exemple un seul processeur. Alternativement, le dispositif de traitement informatique comprend plusieurs processeurs, qui sont situés dans une même zone géographique, ou sont, au moins partiellement, situés dans des zones géographiques différentes et sont alors propres à communiquer entre eux.

A chaque occurrence du terme « mémoire », on entend toute mémoire informatique volatile ou non volatile appropriée au sujet actuellement divulgué, telle qu'une mémoire vive (RAM), une mémoire morte (ROM) ou d'autres éléments électroniques, optique, magnétique ou tout autre support de stockage lisible par ordinateur sur lequel les données et les fonctions des modules décrits ici sont par exemple stockés.

Par conséquent, la mémoire est un support de stockage tangible où les données et les fonctions des modules décrits ici sont par exemple stockés sous une forme non transitoire.

Le module de détection 32 est configuré pour recevoir chaque entrée modale générée par chaque modalité.

Le module de détection 32 est ainsi configuré pour recevoir au cours du temps l'évolution de chaque entrée modale générée par chaque modalité.

Le module de détection 32 est configuré pour traiter en parallèle les entrées modales générées par chaque modalité, c'est-à-dire séparément et simultanément.

En d'autres termes, le module de détection 32 est propre à permettre au module d'interprétation multimodale 34 d'être générique et adaptable à tout type de modalité et à tout nombre de modalités distinctes, c'est-à-dire adaptable par exemple à la ou chaque modalité acoustique 30A, et/ou à la ou chaque modalité optique 30B, et/ou à la ou chaque modalité tactile 30C, et/ou à la ou chaque modalité kinesthésique 30D, et/ou à tout autre modalité 30X le cas échéant.

Le module de détection 32 est configuré, pour chaque entrée modale, pour détecter un changement d'état discret de l'entrée modale depuis un état discret précédemment attribué vers un état discret en cours nouvellement attribué à l'entrée modale, et pour déterminer des données caractéristiques de l'état discret en cours de l'entrée modale suite au changement d'état détecté.

L'état discret en cours correspond à un nouvel état discret qui diffère de l'état discret précédemment attribué.

La détection a lieu en temps réel, par exemple au cours du pilotage de l'aéronef, notamment au cours du vol de l'aéronef.

Le changement d'état discret est détecté en fonction d'au moins un critère de détection.

De préférence, le module de détection 32 est configuré, pour chaque entrée modale, pour attribuer un état discret en cours à l'entrée modale choisi dans une liste d'au moins deux états discrets possibles.

L'état discret en cours nouvellement attribué est en particulier choisi dans la liste d'états discrets possibles.

Chaque état discret possible est par exemple associé un critère de détection propre.

Dans un mode de réalisation préféré, pour chaque entrée modale, chaque critère de détection et chaque état discret possible associé sont stockés sur un fichier configurable de manière externe par un opérateur.

L'ensemble des critères de détection et des états discrets possibles est propre à être modifié en amont du fonctionnement du système de commande 14 par l'utilisateur, notamment par l'ajout, en cas d'une nouvelle modalité à intégrer au système de commande, de nouveaux états discrets possibles pour toute entrée modale générée par cette nouvelle modalité. Ledit ensemble est ensuite propre à être chargé dans le module de détection 32.

Ainsi, le module de détection 32 peut être adapté facilement à toute nouvelle modalité.

Le module de détection 32 est configuré pour attribuer et détecter un changement d'état discret en cours de l'entrée modale, indépendamment de la nature de l'évolution de l'entrée modale (continue ou discrète notamment).

En d'autres termes, le module de détection 32 n'attribue et ne détecte que des changements d'états discrets bien que l'entrée modale puisse évoluer de manière continue.

Des exemples plus précis de détection pour des entrées modales vont maintenant être décrites.

Dans le cas d'une modalité acoustique 30A générant une entrée modale audio, les états discrets possibles associés comprennent des états correspondant respectivement à des éléments de langage propres à être interprétés dans les sons utilisateurs détectés et identifiés de l'entrée modale audio.

Les éléments de langage correspondent de préférence à une intention de l'utilisateur ou un élément désigné par l'utilisateur.

Pour chacun de ces états discrets possibles, le critère de détection associé correspond ainsi au moins à la reconnaissance d'au moins un élément de langage interprété dans les sons utilisateurs détectés et identifiés de l'entrée modale audio.

Pour ce faire, le module de détection 32 est par exemple configuré pour mettre en oeuvre un traitement de compréhension du langage naturel NLU (de l'anglais : « Natural Language Understanding »). Un tel traitement est par exemple propre à déterminer au moins un élément de langage interprété correspondant à une intention de l'utilisateur ou un élément désigné par l'utilisateur, à partir des sons utilisateurs détectés et identifiés de l'entrée modale audio.

Le module de détection 32 attribue l'état discret en cours correspondant à ou aux élément(s) de langage interprété(s) dans l'entrée modale audio.

Les données caractéristiques de chaque état discret possible sont alors par exemple représentatives du ou des élément(s) de langage interprété(s).

Les données caractéristiques incluent par exemple alors un élément matériel ou virtuel désigné vocalement par l'utilisateur ou, comme détaillé par la suite, une requête vocale de l'utilisateur.

Les états discrets possibles associés à l'entrée modale audio comprennent aussi de préférence au moins un état correspondant à une absence de sons utilisateur ou une absence d'interprétation.

Ainsi, lorsque le dispositif d'analyse audio 42 ne détecte plus de sons utilisateur ou que le traitement de compréhension du langage naturel NLU n'interprète plus d'élément(s) de langage, le module de détection 32 détecte aussi un changement d'état car l'entrée modale audio varie, et le module de détection 32 attribue un état discret en cours correspondant à une absence de sons utilisateurs ou une absence d'interprétation.

Les données caractéristiques de cet état discret en cours sont alors par exemple représentatives d'une absence de sons utilisateurs ou d'une absence d'interprétation.

Dans le cas d'une modalité tactile 30C comprenant un clavier ou un bouton poussoir générant une entrée modale tactile, les états discrets possibles associés comprennent des états correspondant respectivement à l'actionnement de chaque touche du clavier ou l'actionnement du bouton poussoir.

Pour chacun de ces états discrets possibles, le critère de détection associé correspond ainsi au moins à l'actionnement de la touche ou du bouton poussoir associé.

Ainsi, le module de détection 32 détecte un changement d'état discret de l'entrée modale tactile à chaque actionnement du clavier ou du bouton poussoir. Le module de détection 32 attribue l'état discret en cours correspondant à la touche ou au bouton poussoir actionné(e) à l'entrée modale tactile.

Les données caractéristiques de cet état discret en cours sont alors par exemple représentatives dudit actionnement.

Les états discrets possibles associés à l'entrée modale tactile comprennent aussi de préférence au moins un état correspondant à une absence d'actionnement.

Ainsi, lorsque l'utilisateur n'actionne plus le clavier ou le bouton poussoir, le module de détection 32 détecte aussi un changement d'état de l'entrée modale tactile, et attribue l'état discret en cours correspondant à une absence d'actionnement à l'entrée modale tactile.

Les données caractéristiques de cet état discret en cours sont alors par exemple représentatives d'une absence d'actionnement.

Dans le cas d'une modalité tactile 30C comprenant un dispositif de pointage, comme une manette 50 ou l'écran tactile 52, générant une entrée modale tactile représentative d'une zone pointée, les états discrets possibles associés comprennent au moins un état correspondant à un pointage d'une cible.

La cible est par exemple un élément virtuel affiché par l'écran 26.

De préférence, le critère de détection associé porte sur une variation de l'entrée modale tactile, par exemple sur un degré de variation en cours de l'entrée modale tactile.

Le critère de détection associé à l'état de pointage est par exemple vérifié au moins si la variation de l'entrée modale tactile par rapport à une cible reste en dessous d'un seuil prédéterminé de variation pendant une durée minimale prédéterminée non nulle.

La cible pointée est par exemple fixe par rapport à une référence, la référence correspondant par exemple aux bords de l'écran 26. Le seuil de variation est alors par exemple nul.

En d'autres termes, le module de détection 32 détecte un changement d'état discret de l'entrée modale tactile lorsque le dispositif de pointage ne se déplace plus et donc que la variation absolue de l'entrée modale tactile associée est nulle. Le module de détection 32 attribue l'état discret en cours correspondant au pointage de la cible fixe à l'entrée modale tactile.

La cible pointée est par exemple mobile par rapport à la référence. Le seuil de variation est alors par exemple non nul, pour prendre en compte une éventuelle variation du dispositif de pointage autour de la cible pointée mobile.

En d'autres termes, le module de détection 32 détecte un changement d'état discret de l'entrée modale tactile lorsque le dispositif de pointage se déplace et suit une cible mobile, la variation relative de l'entrée modale tactile par rapport à la cible pointée étant en dessous du seuil de variation non nul. Le module de détection 32 attribue l'état discret en cours correspondant au pointage de la cible mobile à l'entrée modale tactile.

Les données caractéristiques de l'état discret en cours de pointage sont alors par exemple représentatives de la cible pointée, par exemple des paramètres de positionnement de ladite cible pointée.

Les états discrets possibles associés à ladite entrée modale tactile comprennent aussi de préférence au moins un état correspondant à une absence de pointage.

En particulier, le critère de détection associé à l'état d'absence de pointage est vérifié au moins si la variation de l'entrée modale continue passe au-dessus dudit seuil prédéterminé de variation.

Ainsi, lorsque le dispositif de pointage varie de la zone ou de la cible préalablement pointée, le module de détection 32 détecte un changement d'état car la variation de l'entrée modale optique passe au-dessus du seuil de variation. Le module de détection 32 détecte en particulier un changement d'état et attribue l'état discret en cours d'absence de pointage à l'entrée modale tactile.

Les données caractéristiques de cet état discret en cours sont alors par exemple représentatives d'une absence de zone pointée.

Dans une variante préférée, l'état d'absence de pointage est associé à un autre critère de détection, qui est vérifié au moins si la cible reste pointée au-delà d'une durée maximale prédéterminée non nulle.

En d'autres termes, le module de détection 32 détecte un changement d'état discret de l'entrée modale tactile lorsque le dispositif de pointage ne se déplace plus au-delà de la durée maximale prédéterminée non nulle. Le module de détection 32 attribue l'état discret en cours d'absence de pointage à l'entrée modale tactile.

Un tel critère de détection permet ultérieurement au module d'interprétation multimodale de ne pas tenir compte de la cible pointée par le dispositif de pointage, au-delà d'une certaine durée.

Dans le cas d'une modalité optique 30B comprenant un dispositif de suivi de regard générant une entrée modale optique représentative d'une zone pointée par l'oeil de l'utilisateur, les états discrets possibles associés comprennent au moins un état correspondant à un pointage d'une cible.

La cible est par exemple un élément virtuel affiché par l'écran 26.

De préférence, le critère de détection associé porte sur une variation de l'entrée modale optique, par exemple sur un degré de variation en cours de l'entrée modale optique.

Le critère de détection associé à l'état de pointage est par exemple vérifié au moins si la variation de l'entrée modale optique par rapport à une cible reste en dessous d'un seuil prédéterminé de variation pendant une durée minimale prédéterminée non nulle.

Le seuil de variation est alors par exemple non nul, pour prendre en compte le mouvement continuel de l'œil même lorsque celui-ci pointe la cible.

La cible pointée est par exemple fixe par rapport à une référence, la référence correspondant par exemple aux bords de l'écran 26.

En d'autres termes, le module de détection 32 détecte un changement d'état de l'entrée modale optique lorsque l'œil ne se déplace sensiblement plus, et donc que l'oeil de l'utilisateur fixe une zone précise de manière prolongée, c'est-à-dire pendant une durée minimale prédéterminée. Le module de détection 32 attribue l'état discret en cours correspondant au pointage de la cible fixe à l'entrée modale optique.

La cible pointée est par exemple mobile par rapport à la référence.

En d'autres termes, le module de détection 32 détecte un changement d'état discret de l'entrée modale optique lorsque l'œil se déplace et suit une cible mobile, la variation relative de l'entrée modale optique par rapport à la cible pointée étant en dessous du seuil de variation non nul. Le module de détection 32 attribue l'état discret en cours correspondant au pointage de la cible mobile à l'entrée modale optique.

Les données caractéristiques de l'état discret en cours de pointage sont alors par exemple représentatives de la cible pointée, par exemple des paramètres de positionnement de ladite cible pointée.

Les états discrets possibles associés à ladite entrée modale optique comprennent aussi de préférence au moins un état correspondant à une absence de pointage.

En particulier, le critère de détection associé à l'état d'absence de pointage est vérifié au moins si la variation de l'entrée modale optique passe au-dessus dudit seuil prédéterminé de variation.

Ainsi, lorsque l'oeil de l'utilisateur varie de la zone ou de la cible préalablement pointée, le module de détection 32 détecte un changement d'état car la variation de l'entrée modale optique passe au-dessus du seuil prédéterminé de variation. Le module de détection 32 détecte en particulier un changement d'état et attribue un état discret en cours d'absence de pointage à l'entrée modale optique dans lequel l'oeil de l'utilisateur ne pointe sur aucune zone précise.

Les données caractéristiques de cet état discret en cours sont alors par exemple représentatives d'une absence de zone pointée.

Le module de détection 32 est aussi configuré pour détecter une requête intentionnelle de l'utilisateur à partir d'au moins une des entrées modales reçues.

La requête est relative à une action sur au moins un objet.

La requête est par exemple une requête d'information portant sur l'objet, l'action étant la demande d'information. La requête d'information est par exemple de type ouverte et appelle une réponse autre que oui/non.

La requête est par exemple une commande de l'utilisateur portant sur l'objet, l'action étant la commande.

La commande vise par exemple à intervenir sur ledit objet afin de modifier au moins un paramètre de vol de l'aéronef 10 en cours de vol et/ou au moins un état avionique de l'aéronef 10, par l'intermédiaire d'au moins un des systèmes de commande 24.

Tout autre requête pourrait être envisagée dans le cadre de l'invention.

Tout type de méthode de détection d'une telle requête est envisageable dans le cadre de l'invention.

De préférence, le module de détection 32 est configuré pour détecter une telle requête à partir d'au moins un changement d'état discret d'une des entrées modales reçues.

La détection d'une telle requête a lieu en temps réel, par exemple au cours du pilotage de l'aéronef, notamment au cours du vol de l'aéronef.

Pour détecter une requête, le module de détection 32 comprend par exemple une base de données de requêtes et de conditions de déclenchement associées.

Dans un mode de réalisation préféré, ladite base de données est stockée sur un fichier configurable de manière externe par un opérateur.

L'ensemble des requêtes et des conditions de déclenchement associées est propre à être modifié en amont du fonctionnement du système de commande 14 par l'utilisateur, et est ensuite propre à être chargé dans le module de détection 32.

Chaque condition de déclenchement porte de préférence sur au moins un état discret possible d'au moins une des entrées modales.

Le module de détection 32 est par exemple configuré pour comparer, avec ladite base de données, l'état discret en cours nouvellement attribué suite à chaque changement d'état détecté d'au moins une des entrées modales.

Au moins une requête est par exemple détectée de manière unimodale.

Ladite requête est alors détectée par une ou des condition(s) de déclenchement unimodale(s) ne relevant que d'une seule des entrées modales, c'est-à-dire ne portant que sur un changement d'état d'une seule des entrées modales.

Les conditions de déclenchement unimodales incluent par exemple une condition de déclenchement acoustique portant sur au moins un changement d'état discret de l'entrée modale audio. Par exemple, la condition de déclenchement acoustique porte sur une intention de l'utilisateur ou un élément désigné par l'utilisateur formant des données caractéristiques de l'état discret en cours attribué de l'entrée modale audio suite à un changement d'état de l'entrée modale audio.

En d'autres termes, le module de détection 32 est configuré pour détecter une requête de l'utilisateur à partir d'au moins un changement d'état discret de l'entrée modale audio générée par la modalité acoustique 30A.

Les conditions de déclenchement unimodales incluent aussi par exemple au moins une condition de déclenchement tactile, une condition de déclenchement optique et/ou une condition de déclenchement kinesthésique.

Au moins une requête est par exemple détectée de manière multimodale. Ladite requête est alors détectée par au moins deux conditions de déclenchement unimodales relevant respectivement de deux entrées modales distinctes, par exemple de deux entrées modales générées par deux modalités distinctes.

Le module de détection 32 est configuré pour envoyer chaque état discret en cours nouvellement attribué suite à un changement d'état détecté, et chaque requête détectée au module d'interprétation multimodale 34.

Le module de détection 32 est ainsi interposé entre le module d'interprétation multimodale 34 et chaque modalité, et n'envoie des éléments au module d'interprétation multimodale 34 que sur changement d'état des entrées modales.

Pour ce faire, dans un mode de réalisation préféré, le module de détection 32 est configuré pour convertir chaque état discret en cours nouvellement attribué suite à un changement d'état détecté et chaque requête détectée en un vecteur de transmission et pour envoyer ledit vecteur de transmission au module d'interprétation multimodale 34.

Avantageusement, chaque vecteur de transmission présente un même formatage commun à tous les vecteurs de transmission envoyés par le module de détection 32 au module d'interprétation multimodale 34.

Le formatage est en particulier le même que le vecteur de transmission soit associé à une requête détectée ou à un changement d'état détecté qui n'est associé à aucune requête.

En d'autres termes, toutes les entrées modales sont gérées sous un même formalisme. Il est possible d'avoir une architecture du système de commande 14 qui reste générique, sans dépendre de la nature des modalités considérées. En particulier, il est possible de facilement ajouter ou supprimer des modalités.

Le formatage commun est configurable par fichier externe.

Le formatage commun comporte alors au moins des champs de requête et de changement d'état.

Le module de détection 32 est configuré, pour chaque changement d'état détecté, pour remplir le contenu de chaque champ du vecteur de transmission associé en fonction desdites données caractéristiques associées à l'état discret en cours nouvellement attribué suite au changement d'état détecté.

De plus, le module de détection 32 est configuré, pour chaque requête détectée, pour remplir le contenu de chaque champ du vecteur de transmission associé en fonction des données caractéristiques associées à l'état discret en cours nouvellement attribué suite à chaque changement d'état détecté à partir duquel a été détecté la requête.

En particulier, dans chaque cas, le module de détection 32 est configuré pour déterminer, parmi ces données caractéristiques, les données relevant du contenu de chaque champ.

Le module de détection 32 est par exemple configuré pour remplir tous les champs ne correspondant à aucune des données caractéristiques avec une information représentative d'un caractère vide du champ.

Les champs comprennent par exemple au moins un champ stockant une information représentative de l'entrée modale d'origine.

Les champs comprennent de préférence un champ d'identification de requête.

Le contenu du champ d'identification de requête est représentatif du fait que le vecteur de transmission soit associé à une requête ou non.

Le contenu du champ d'identification de requête est aussi par exemple représentatif de l'action formant la requête détectée le cas échéant (par exemple le fait qu'une distance est demandée).

Les champs comprennent de préférence au moins un champ essentiel de requête pour mettre en oeuvre la requête.

En particulier, comme expliqué par la suite, dans le cas où au moins un des champs essentiels stocke une information représentative du caractère vide du champ, la requête est incomplète et ne peut être mise en oeuvre.

Dans un mode de réalisation, les champs essentiels comprennent par exemple au moins un champ portant sur une identification de l'objet concerné (par exemple l'objet dont l'utilisateur souhaite connaitre la distance) et par exemple un champ portant sur un type d'objet concerné.

Par exemple, les champs comprennent aussi au moins un champ non-essentiel pour mettre en oeuvre la requête.

Par exemple, un tel champ non-essentiel porte sur des informations additionnelles complémentaires sur l'objet concerné par la requête.

Le module d'interprétation multimodale 34 est interposé entre le module de détection 32 et le système central avionique 14.

Le module d'interprétation multimodale 34 est configuré pour envoyer des requêtes au système central avionique 14 pour mise en oeuvre, les requêtes n'étant envoyées au système central avionique 14 que si elles sont suffisamment complètes pour être mises en oeuvre.

Pour ce faire, le module d'interprétation multimodale 34 est configuré, à chaque changement d'état détecté d'une des entrées modales, pour stocker et mettre à jour les données caractéristiques de l'état discret en cours nouvellement attribué de l'entrée modale suite au changement d'état détecté.

En d'autres termes, pour chaque entrée modale, le module d'interprétation multimodale 34 est configuré pour stocker en mémoire le dernier changement d'état discret ayant eu lieu pour l'entrée modale.

En particulier, pour chaque changement d'état détecté par le module de détection 32, le module d'interprétation multimodale 34 est configuré pour recevoir chaque vecteur de transmission associé et pour mettre à jour lesdits données caractéristiques de l'état discret en cours nouvellement attribué en fonction du vecteur de transmission.

Dans une variante de réalisation, le module d'interprétation multimodale 34 est configuré pour stocker un historique des états discrets en cours attribués successivement au cours du temps.

Le module d'interprétation multimodale 34 est configuré, à chaque requête de l'utilisateur détectée, pour déterminer si ladite requête est suffisamment complète pour être mise en oeuvre.

Dans un exemple de réalisation, le module d'interprétation multimodale 34 est configuré pour déterminer si ladite requête est suffisamment complète pour être mise en oeuvre au moins si un des champs essentiels du vecteur de transmission associé est vide.

En cas de requête incomplète, le module d'interprétation multimodale 34 est configuré pour compléter la requête incomplète à partir d'au moins une des données caractéristiques à jour stockées de l'état discret en cours d'une autre entrée modale, par exemple une entrée modale générée par une autre modalité. L'autre entrée modale, et le cas échéant l'autre modalité, est distincte de celle(s) à partir de laquelle la requête a été détectée.

Plus précisément, le module d'interprétation multimodale 34 est configuré pour comparer la requête incomplète avec les données caractéristiques à jour stockées de l'état discret en cours de chaque autre entrée modale.

La requête est complétée suite à cette comparaison.

Dans un exemple de réalisation, le module d'interprétation multimodale 34 est configuré pour compléter la requête incomplète uniquement à partir d'une ou de donnée(s) caractéristique(s) à jour stockée(s) d'un ou d'état(s) discret(s) en cours.

En d'autres termes, le module d'interprétation multimodale 34 ne nécessite pas de fenêtre temporelle pour compléter les requêtes, mais se base sur les états discrets à jour, c'est-à-dire sur les derniers changements d'états détectés des entrées modales.

Ainsi, en cas de requête incomplète, le module d'interprétation multimodale 34 est configuré pour compléter la requête incomplète sans nécessairement déterminer de fenêtre temporelle complexe pour les entrées modales.

En variante, le module d'interprétation multimodale 34 est configuré pour compléter la requête incomplète à partir d'une ou de donnée(s) caractéristique(s) à jour stockée(s) d'un ou d'état(s) discret(s) en cours, et à partir d'une fenêtre temporelle comprenant une corrélation temporelle entre les différentes entrées modales. Une telle fenêtre temporelle est par exemple déterminée par le module de détection 32.

Dans un exemple de réalisation, le module d'interprétation multimodale 34 est configuré pour compléter la requête incomplète en complétant chaque champ essentiel vide du vecteur de transmission associé à la requête incomplète.

Chaque champ essentiel vide est complété à partir du contenu du champ correspondant associé à l'état discret en cours de ladite autre entrée modale.

Le module d'interprétation multimodale 34 est par exemple propre à utiliser les états discrets en cours d'au moins deux entrées modales distinctes pour compléter respectivement différents champs essentiels vides de la requête incomplète.

Après avoir complété la requête précédemment incomplète, le module d'interprétation multimodale 34 est configuré pour envoyer la requête complétée au système central d'avionique 14 pour être mise en oeuvre.

Dans un mode de réalisation avantageux dans lequel la ou l'ensemble des modalités génère au total au moins trois entrées modales distinctes qui sont reçues par le module de détection 32, le module d'interprétation multimodale 34 est en outre configuré pour détecter une ambiguïté pour compléter la requête incomplète.

Il s'agit par exemple de l'exemple illustré sur la figure 1, dans lequel au moins trois modalités distinctes génèrent respectivement au moins une entrée modale.

L'ambiguïté détectée est une ambiguïté entre les états discrets en cours d'au moins deux autres entrées modales, par exemple générées respectivement par deux autres modalités, lesdites autres entrées modales étant distinctes de celle(s) à partir de laquelle la requête incomplète a été détectée.

Pour ce faire, le module d'interprétation multimodale 34 est par exemple configuré pour détecter une telle ambiguïté suite à la comparaison de la requête incomplète avec les données caractéristiques à jour stockées de l'état discret en cours de chaque autre entrée modale.

L'ambiguïté est détectée au moins lorsque les données caractéristiques à jour stockées d'au moins deux états discrets en cours, qui correspondent au champ essentiel vide associé à la requête incomplète, sont contradictoires.

En cas d'ambiguïté détectée, le module d'interprétation multimodale 34 est configuré pour faire appel au module de désambiguïsation 36.

Le module de désambiguïsation 36 est configuré pour fournir une directive de désambiguïsation au module d'interprétation multimodale 34 en cas d'ambiguïté détectée.

Le module de désambiguïsation 36 stocke en particulier ladite directive de désambiguïsation.

La directive de désambiguïsation comprend de préférence à un ordre de priorité sur les entrées modales pour compléter la requête.

La directive de désambiguïsation comprend en complément ou en variante une requête de questionnement de l'utilisateur. Dans un exemple de réalisation, la requête de questionnement fait partie de l'ordre de priorité.

Dans un mode de réalisation préféré, la directive de désambiguïsation est stockée sur un fichier configurable de manière externe par un opérateur.

Le fichier présente par exemple un format xml.

Ainsi, le fichier est propre à être modifié en amont du fonctionnement du système de commande 14 par l'utilisateur, notamment en fonction de ses préférences, et est ensuite propre à être chargé dans le module de désambiguïsation 36.

De préférence, le module de désambiguïsation 36 stocke au moins deux directives de désambiguïsation distinctes, chaque directive de désambiguïsation étant associée à un utilisateur distinct.

De préférence, le module de désambiguïsation 36 stocke autant de directives de désambiguïsation distinctes que d'utilisateurs distincts.

Le module de désambiguïsation 36 est configuré pour fournir la directive de désambiguïsation en fonction de l'utilisateur à l'origine de la requête incomplète.

Les deux directives distinctes présentent par exemple des ordres de priorité distincts.

Suite à la fourniture de la directive de désambiguïsation, le module d'interprétation multimodale 34 est configuré pour compléter la requête incomplète en fonction de ladite directive de désambiguïsation fournie.

En particulier, le module d'interprétation multimodale 34 complète la requête incomplète en suivant l'ordre de priorité sur les entrées modales.

Plus précisément, le module d'interprétation multimodale 34 est configuré pour compléter le champ essentiel vide avec le contenu du champ non vide correspondant associé à l'état discret en cours de l'entrée modale donné par l'ordre de priorité.

De plus, si la directive de désambiguïsation inclut une requête de questionnement de l'utilisateur, le module d'interprétation multimodale 34 est alors configuré pour interroger l'utilisateur en fonction de la requête de questionnement, par exemple par l'intermédiaire du système central avionique 14 qui inclut alors une interface homme-machine 56 en ce but.

Le système central avionique 14 est propre à acquérir la réponse de l'utilisateur à la requête de questionnement et à envoyer la réponse acquise au module d'interprétation multimodale 34.

Le module d'interprétation multimodale 34 est propre à compléter la requête incomplète en fonction de la réponse acquise.

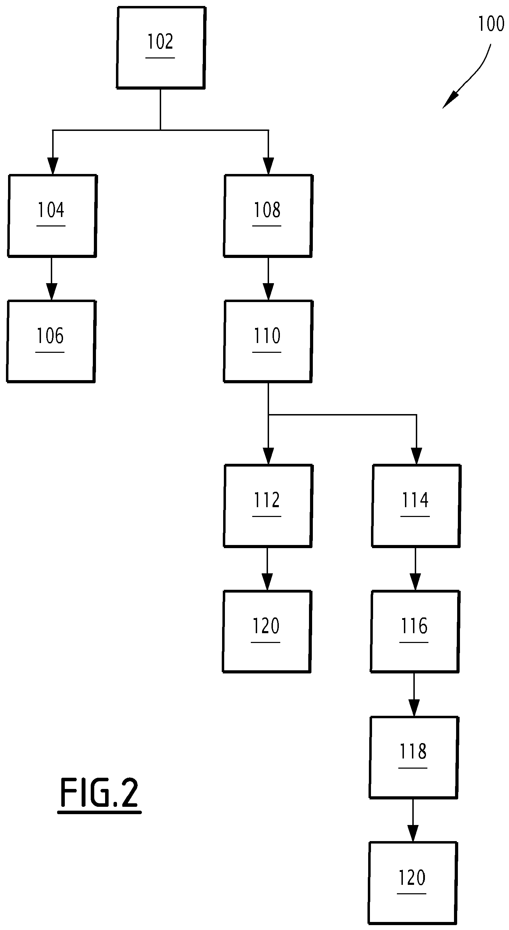

Une méthode de commande 100 va maintenant être décrite en référence à la figure 2.

La méthode de commande 100 est par exemple mise en oeuvre par ordinateur et en particulier par le système de commande 14 décrit ci-dessus. La méthode de commande 100 comprend alors la fourniture 102 du système de commande 14 décrit ci-dessus.

La méthode 100 comprend la mise en oeuvre des fonctions des différents modules 32, 34, 36 décrites ci-dessus.

La méthode 100 comprend la génération d'au moins deux entrées modales distinctes, chaque entrée modale étant générée à partir d'une même modalité ou à partir respectivement d'au moins deux modalités distinctes.

Chaque entrée modale générée par chaque modalité 30A-30X évolue au cours du temps, en fonction de l'utilisateur et de ses actions.

La méthode 100 comprend la détection 104, pour chaque entrée modale, d'un changement d'état discret de l'entrée modale depuis un état discret précédemment attribué vers un état discret en cours nouvellement attribué à l'entrée modale et la détermination de données caractéristiques de l'état discret en cours de l'entrée modale suite au changement d'état détecté.

Plus précisément, l'étape d'attribution 104 comprend, pour chaque entrée modale, la détection d'un changement d'état discret de l'entrée modale depuis un état discret précédemment attribué vers un nouvel état discret en cours.

La détection 104 est faite de manière similaire à ce qui a été décrit ci-dessus pour les fonctions du module de détection 32.

La détection 104 a lieu en temps réel, par exemple au cours du pilotage de l'aéronef, notamment au cours du vol de l'aéronef.

La méthode 100 comprend, à chaque changement d'état détecté d'une des entrées modales, une étape 106 de stockage et la mise à jour des données caractéristiques de l'état discret en cours de l'entrée modale suite au changement d'état détecté.

La méthode 100 comprend aussi la détection 108 d'une requête de l'utilisateur à partir d'au moins une des entrées modales.

Tout type de méthode de détection d'une telle requête est envisageable dans le cadre de l'invention.

De préférence, la détection 108 d'une requête est à partir d'au moins un changement d'état discret de l'entrée modale générée par une des modalités.

La détection 108 est faite de manière similaire à ce qui a été décrit ci-dessus pour les fonctions du module de détection 32.

La détection 108 a lieu en temps réel, par exemple au cours du pilotage de l'aéronef, notamment au cours du vol de l'aéronef.

La méthode 100 comprend en outre, à chaque requête de l'utilisateur détectée, une étape 110 de détermination de si ladite requête est suffisamment complète pour être mise en oeuvre.

En cas de requête incomplète, la requête incomplète est alors complétée (étape 112) à partir d'au moins une des données caractéristiques à jour stockées de l'état discret en cours d'une autre entrée modale, l'autre entrée modale étant distincte de celle(s) à partir de laquelle la requête a été détectée.

L'étape 106 de stockage et de mise à jour, l'étape 110 de détermination et l'étape 112 au cours de laquelle la requête incomplète est complétée sont faites de manière similaire à ce qui a été décrit ci-dessus pour les fonctions du module d'interprétation multimodale 34.

Dans un mode de réalisation avantageux dans lequel la ou l'ensemble des modalité(s) génère au total au moins trois entrées modales distinctes, la méthode 100 comprend en outre la détection 114 d'une ambiguïté pour compléter la requête incomplète, et la fourniture 116 d'une directive de désambiguïsation, la requête incomplète étant complétée (étape 118) en fonction de ladite directive de désambiguïsation fournie.

Ces étapes 114, 116 sont faites de manière similaire à ce qui a été décrit ci-dessus pour les fonctions du module de désambiguïsation 36.

Après avoir été complétée, la requête précédemment incomplète est envoyée au système central d'avionique 14 pour mise en oeuvre (étape 120).

Des exemples de situations plus précis vont maintenant être décrits dans le cadre de l'aéronef 10 de la figure 1.

L'utilisateur est alors un pilote de l'aéronef 10, et l'écran 26 affiche des points de passages (waypoints).

Un premier exemple correspond à la situation au cours de laquelle l'écran tactile 52 n'est pas manipulé par l'utilisateur, la manette 50 ne pointe sur aucune zone précise ou pointe sur une zone sans élément virtuel, l'utilisateur fixe un des points de passages affichés sur l'écran 26, désigné par les termes waypoint 1, et le pilote dit « quelle est à la distance au waypoint ? ».

Le module de détection 32 détecte alors un changement d'état de l'entrée modale optique depuis un état correspondant à une absence de pointage, vers un état discret en cours correspondant au pointage d'une cible fixe par l'œil de l'utilisateur, qui est ici une zone précise de l'écran 26 incluant l'élément virtuel correspondant au waypoint 1. Les données caractéristiques de cet état discret en cours incluent le waypoint 1 localisé dans la zone pointée par l'oeil.

Le module de détection 32 ne détecte pas de requête de l'utilisateur à partir de cette entrée modale optique, dans la mesure où ce changement d'état ne correspond dans cet exemple particulier à aucune condition de déclenchement.

Le vecteur de transmission associé envoyé par le module de détection 32 inclut dans cet exemple les champs suivants :
- Entrée modale : optique
- Identifiant de la requête : vide
- Type d'objet concerné : point de passage
- Identifiant de l'objet concerné : waypoint 1
- Informations complémentaires de l'objet concerné : Vide

Le module d'interprétation multimodale 34 stocke et met à jour en conséquence les données caractéristiques de l'état discret en cours de l'entrée modale optique suite à ce changement d'état détecté.

Le dispositif d'analyse audio 42 détecte et identifie, en parallèle, différents sons utilisateurs dans l'information acoustique acquise correspondant ici à la suite de termes « quelle est à la distance au waypoint ? » et formant l'entrée modale audio.

Par le traitement de compréhension du langage naturel NLU, le module de détection 32 identifie des éléments de langage dans cette entrée modale audio, correspondant ici à une requête portant sur une distance, et à un type d'objet concerné par la requête, ici un point de passage.

Le module de détection 32 détecte alors ainsi en parallèle un changement d'état de l'entrée modale audio depuis un état discret précédemment attribué correspondant à une absence de sons utilisateur ou une absence d'interprétation, vers un état discret en cours correspondant aux éléments de langage interprétés dans l'entrée modale audio. Les données caractéristiques de cet état discret en cours sont alors représentatives de ces éléments de langage interprétés.

Le module de détection 32 détecte une requête de l'utilisateur à partir de l'entrée modale audio, et en particulier à partir de ce changement d'état détecté de l'entrée modale audio. Cette requête est détectée à partir de la comparaison de ce changement d'état détecté de l'entrée modale audio avec la base de données de requêtes, au moins un des éléments de langage interprétés étant reconnu(s) comme une des conditions de déclenchement de la base de données.

Le vecteur de transmission associé à la requête envoyé par le module de détection 32 inclut dans cet exemple les champs suivants :
- Entrée modale : audio
- Identifiant de la requête : distance
- Type d'objet concerné : point de passage
- Identifiant de l'objet concerné : vide
- Informations complémentaires de l'objet concerné : Vide

Le module d'interprétation multimodale 34 détermine que la requête n'est pas suffisamment complète pour être mise en oeuvre, dans la mesure où le champ essentiel correspondant à l'identifiant de l'objet concerné est vide.

Le module d'interprétation multimodale 34 complète la requête incomplète uniquement à partir des données caractéristiques à jour stockées de l'état discret en cours de l'entrée modale optique.

Les données caractéristiques en cours des états discrets à jour des autres entrées modales, dans ce cas les deux entrées modales tactiles associées à la manette 50 et à l'écran tactile 52, ne permettent pas de compléter la requête.

En effet, les états discrets en cours stockés par le module d'interprétation multimodale 34 pour les entrées modales associées à la manette 50 et à l'écran tactile 52 sont des états correspondant à une absence de pointage.

Le module d'interprétation multimodale 34 complète le champ essentiel vide de l'identifiant de l'objet concerné avec la donnée caractéristique « waypoint 1 » de l'état discret en cours de l'entrée modale optique.

Le module d'interprétation multimodale 34 envoie la requête complète, correspondant à la requête « quelle est à la distance au waypoint 1 ? », au système central avionique 14.

Le système central avionique 14 met en oeuvre la requête complète fournie par le module d'interprétation multimodale 34. En l'occurrence, le système central avionique 14 fournit à l'utilisateur une réponse à la requête complétée.

Un deuxième exemple correspond à la situation au cours de laquelle l'écran tactile 52 n'est pas manipulé par l'utilisateur, l'utilisateur regarde un des points de passages affichés sur l'écran 26, désigné par les termes waypoint 1, et a manipulé la manette 50 pour qu'elle pointe sur un autre des points de passages affichés sur l'écran 26, désigné par les termes waypoint 2, et le pilote dit « quelle est à la distance au waypoint ? ».

L'entrée modale optique est traitée comme dans le premier exemple.

Le module de détection 32 détecte alors en parallèle un changement d'état de l'entrée modale tactile associée à la manette 50 depuis un état correspondant à une absence de pointage, vers un état discret en cours correspondant à un pointage d'une cible, qui est ici une zone précise de l'écran 26 incluant l'élément virtuel correspondant au waypoint 2. La détection a été fait car la manette 50 présente une variation nulle par rapport audit waypoint 2. Les données caractéristiques de cet état discret en cours incluent le waypoint 2 localisé dans la zone pointée par la manette 50.

Le vecteur de transmission associé envoyé par le module de détection 32 inclut dans cet exemple les champs suivants :
- Entrée modale : tactile - manette
- Identifiant de la requête : vide
- Type d'objet concerné : point de passage
- Identifiant de l'objet concerné : waypoint 2
- Informations complémentaires de l'objet concerné : Vide

Le module d'interprétation multimodale 34 stocke et met à jour en conséquence les données caractéristiques de l'état discret en cours de l'entrée modale tactile associée à la manette 50 suite à ce changement d'état détecté.

Comme dans le premier exemple, le module d'interprétation multimodale 34 détermine que la requête associée à la modalité acoustique 30A n'est pas suffisamment complète pour être mise en oeuvre, dans la mesure où le champ essentiel correspondant à l'identifiant de l'objet concerné est vide.

Cependant, le module d'interprétation multimodale 34 détecte une ambiguïté pour compléter la requête incomplète. En effet, les données caractéristiques à jour stockées de l'état discret en cours de l'entrée modale optique et de l'état discret en cours de l'entrée modale tactile associée à la manette 50 sont contradictoires, entre le waypoint 1 et le waypoint 2.

Le module d'interprétation multimodale 34 fait alors appel au module de désambiguïsation 36 qui fournit une directive de désambiguïsation.

Dans un mode de réalisation, la directive de désambiguïsation comprend un ordre de priorité, dans lequel la modalité optique 30B est prioritaire sur la modalité tactile 30C.

En conséquence, le module d'interprétation multimodale 34 complète le champ essentiel vide de l'identifiant de l'objet concerné avec la donnée caractéristique « waypoint 1 » de l'état discret en cours de l'entrée modale optique.

Le module d'interprétation multimodale 34 envoie la requête complète, correspondant à la requête « quelle est à la distance au waypoint 1 ? », au système central avionique 14.

Le système central avionique 14 met en oeuvre la requête complète fournie par le module d'interprétation multimodale 34. En l'occurrence, le système central avionique 14 fournit à l'utilisateur une réponse à la requête complétée.

Dans un autre mode de réalisation, la directive de désambiguïsation comprend une requête de questionnement de l'utilisateur.

En conséquence, le module d'interprétation multimodale 34 interroge l'utilisateur en fonction de la requête de questionnement, par l'intermédiaire du système central avionique 14. Le système central avionique 14 acquière la réponse de l'utilisateur à la requête de questionnement et envoie la réponse acquise au module d'interprétation multimodale 34.

Le module d'interprétation multimodale 34 est propre à compléter la requête incomplète en fonction de la réponse acquise. Par exemple, si la réponse de l'utilisateur est de prioriser l'entrée modale tactile associée à la manette 50, le module d'interprétation multimodale 34 complète le champ essentiel vide de l'identifiant de l'objet concerné avec la donnée caractéristique « waypoint 2 » de l'état discret en cours de l'entrée modale tactile 30C associée à la manette 50.

Le module d'interprétation multimodale 34 envoie alors la requête complète, correspondant à la requête « quelle est à la distance au waypoint 2 ? », au système central avionique 14.

Grâce aux caractéristiques décrites ci-dessus, le système de l'invention se base sur un mécanisme de gestion des entrées modales détectant des changements d'états et fonctionnant sur la base d'états discrets en cours attribués pour compléter des requêtes de l'utilisateur, sans nécessiter d'utiliser une fenêtre temporelle pour corréler temporellement entre elles les entrées modales. Cela simplifie drastiquement la gestion de la multimodalité.

Il est toujours possible au système de commande de prendre en compte une temporalité entre les entrées modales, mais cela n'est pas nécessaire à la gestion des entrées modales dans l'invention.

De plus, le système de l'invention présente une architecture de multimodalité, correspondant aux modules 32 et 34, pouvant prendre en entrée autant de modalités différentes que nécessaires, de façon générique.

Les modules 32 et 34 forment une architecture de multimodalité qui est fonctionnellement indépendante de la partie du système qui applique la commande. Elle peut donc aisément s'adapter à un système existant, sans modification de l'architecture de ce système existant.

En outre, le système de l'invention se base aussi de préférence sur un mécanisme de désambiguisation configurable, permettant de gérer les situations ambigües en priorisant les modalités les unes par rapport aux autres et permettant de savoir quand interroger l'utilisateur pour désambiguïser.

## Revendications

1. Système de commande (14) comprenant :
- un module de détection (32) de changement d'état modal configuré pour recevoir au moins deux entrées modales distinctes, chaque entrée modale étant générée à partir d'une même modalité ou à partir respectivement d'au moins deux modalités distinctes ;
le module de détection (32) étant configuré, pour chaque entrée modale reçue, pour détecter un changement d'état discret de l'entrée modale depuis un état discret précédemment attribué vers un état discret en cours nouvellement attribué à l'entrée modale et pour déterminer des données caractéristiques de l'état discret en cours de l'entrée modale suite au changement d'état détecté ;
le module de détection (32) étant aussi configuré pour détecter une requête de l'utilisateur à partir d'au moins une des entrées modales reçues ;
- un module d'interprétation multimodale (34) configuré, à chaque changement d'état détecté d'une des entrées modales, pour stocker et mettre à jour les données caractéristiques de l'état discret en cours de l'entrée modale suite au changement d'état détecté ;
le module d'interprétation multimodale (34) étant aussi configuré, à chaque requête de l'utilisateur détectée, pour déterminer si ladite requête est suffisamment complète pour être mise en oeuvre, et, en cas de requête incomplète, pour compléter la requête incomplète à partir d'au moins une des données caractéristiques à jour stockées de l'état discret en cours d'une autre entrée modale distincte de chaque entrée modale à partir de laquelle la requête a été détectée.

2. Système de commande (14) selon la revendication 1, dans lequel chaque changement d'état discret est détecté en fonction d'au moins un critère de détection ; et, de préférence, l'état discret en cours nouvellement attribué est choisi dans une liste d'au moins deux états discrets possibles ; chaque critère de détection et chaque état discret possible étant avantageusement stockés sur un fichier configurable de manière externe par un opérateur.

3. Système de commande (14) selon l'une des revendications 1 ou 2, dans lequel le module d'interprétation multimodale (34) est configuré, en cas de requête incomplète, pour compléter la requête incomplète uniquement à partir d'une ou de donnée(s) caractéristique(s) à jour stockée(s) d'un ou d'état(s) discret(s) en cours.

4. Système de commande (14) selon l'une quelconque des revendications précédentes, dans lequel au moins une des entrées modales est continue, l'entrée modale continue ayant une évolution continue au cours du temps,
le module de détection (32) étant de préférence configuré pour détecter un changement d'état discret de l'entrée modale continue en fonction d'un degré de variation en cours de l'entrée modale continue,
le module de détection (32) étant avantageusement configuré pour détecter un changement d'état discret de l'entrée modale continue au moins si la variation de l'entrée modale continue reste en dessous d'un seuil prédéterminé de variation pendant une durée minimale prédéterminée, par exemple au moins si la variation est nulle pendant ladite durée minimale prédéterminée.

5. Système de commande (14) selon l'une quelconque des revendications précédentes, dans lequel au moins une des entrées modales est discrète, l'entrée modale discrète ayant une évolution discrète au cours du temps, le module de détection (32) étant configuré pour détecter un changement d'état discret de l'entrée modale discrète à chaque variation de l'entrée modale discrète.

6. Système de commande (14) selon l'une quelconque des revendications précédentes, dans lequel le module de détection (32) est configuré pour détecter une requête de l'utilisateur à partir d'au moins un changement d'état discret d'une des entrées modales reçues ; et, de préférence, le module de détection (32) comprend une base de données de requêtes et de conditions de déclenchement associées, chaque condition de déclenchement portant sur l'état discret en cours d'au moins une des entrées modales, ladite base de données étant avantageusement stockée sur un fichier configurable de manière externe par un opérateur.

7. Système de commande (14) selon la revendication 6, dans lequel le module de détection (32) est en outre configuré pour convertir chaque état discret en cours nouvellement attribué suite à un changement d'état détecté et chaque requête détectée en un vecteur de transmission et pour envoyer ledit vecteur de transmission au module d'interprétation multimodale (34),
chaque vecteur de transmission présentant un même formatage commun à tous les vecteurs de transmission envoyés par le module de détection (32), ledit formatage commun comportant au moins des champs,
le module de détection (32) étant configuré, pour chaque changement d'état détecté, pour remplir le contenu de chaque champ du vecteur de transmission associé en fonction desdites données caractéristiques associées à l'état discret en cours nouvellement attribué suite au changement d'état détecté,
le module de détection (32) étant configuré, pour chaque requête détectée, pour remplir le contenu de chaque champ du vecteur de transmission associé en fonction des données caractéristiques associées à l'état discret en cours nouvellement attribué suite à chaque changement d'état détecté à partir duquel a été détecté la requête.

8. Système de commande (14) selon la revendication 7, dans lequel les champs comprennent un champ d'identification de requête et au moins un champ essentiel de requête, le contenu du champ d'identification de requête étant représentatif du fait que le vecteur de transmission soit associé à une requête, le module d'interprétation multimodale (34) étant configuré pour déterminer si ladite requête est suffisamment complète pour être mise en oeuvre au moins si un des champs essentiels du vecteur de transmission associé est vide.

9. Système de commande (14) selon la revendication 8, dans lequel le module d'interprétation multimodale (34) est configuré, en cas de requête incomplète, pour compléter chaque champ essentiel vide du vecteur de transmission associé à la requête incomplète, chaque champ essentiel vide étant complété à partir du contenu du champ correspondant du vecteur de transmission associé à l'état discret en cours de l'entrée modale générée par ladite autre modalité.

10. Système de commande (14) selon l'une quelconque des revendications précédentes, dans lequel le module de détection (32) est configuré pour recevoir au moins trois entrées modales distinctes, le module d'interprétation multimodale (34) étant configuré pour détecter une ambiguïté pour compléter la requête incomplète, l'ambiguïté étant entre les états discrets en cours d'au moins deux autres entrées modales, lesdites autres entrées modales étant distinctes de chaque entrée modale à partir de laquelle la requête incomplète a été détectée,
le système comprenant en outre un module de désambiguïsation (36) configuré pour fournir une directive de désambiguïsation au module d'interprétation multimodale (34) en cas d'ambiguïté détectée,
le module d'interprétation multimodale (34) étant configuré pour compléter la requête incomplète en fonction de ladite directive de désambiguïsation fournie par le module de désambiguïsation (36), la directive de désambiguïsation comprenant de préférence un ordre de priorité sur les entrées modales pour compléter la requête.

11. Système de commande (14) selon la revendication 10, dans lequel la directive de désambiguïsation comprend une requête de questionnement de l'utilisateur, le module d'interprétation multimodale (34) étant alors configuré pour interroger l'utilisateur en fonction de la requête de questionnement par l'intermédiaire d'une interface homme-machine (56).

12. Système de commande (14) selon l'une quelconque des revendications 10 ou 11, dans lequel le module d'interprétation multimodale (34) est configuré pour détecter une ambiguïté entre les états discrets en cours desdites au moins deux autres entrées modales, au moins lorsque les données caractéristiques à jour stockées desdits états discrets en cours, qui correspondent au même champ essentiel vide, sont contradictoires.

13. Système de commande (14) selon l'une quelconque des revendications 9 à 12, dans lequel la directive de désambiguïsation est stockée sur un fichier configurable de manière externe par un opérateur, le fichier présentant de préférence un format xml.

14. Système de commande (14) selon l'une quelconque des revendications 9 à 13, dans lequel le module de désambiguïsation (36) stocke au moins deux directives de désambiguïsation distinctes, chaque directive de désambiguïsation étant associée à un utilisateur distinct, le module de désambiguïsation (36) étant configuré pour fournir la directive de désambiguïsation en fonction de l'utilisateur à l'origine de la requête incomplète.

15. Système de commande (14) selon l'une quelconque des revendications précédentes, dans lequel le système de commande comprend au moins deux modalités distinctes (30A-30X), chaque modalité (30A-30X) comprenant un moyen technique d'acquisition d'au moins une information sensorielle associée à l'utilisateur, chaque modalité (30A-30X) étant configurée pour générer au moins une entrée modale à partir de l'information sensorielle acquise par le moyen technique d'acquisition, et étant configurée pour envoyer chaque entrée modale générée au module de détection (32) ; et, de préférence, une des modalités (30A-30X) est une modalité acoustique (30A), le module de détection (32) étant configuré pour détecter une requête de l'utilisateur à partir d'au moins un changement d'état discret de l'entrée modale générée par la modalité acoustique (30A), et au moins une autre des modalités est choisie parmi une modalité tactile (30C), une modalité optique (30B) ou une modalité kinesthésique (30D), et, de préférence au moins encore une autre des modalités est choisie parmi une modalité tactile (30C), une modalité optique (30B) ou une modalité kinesthésique (30D).

16. Méthode de commande comprenant les étapes suivantes :
- génération d'au moins deux entrées modales distinctes, chaque entrée modale étant générée à partir d'une même modalité ou à partir respectivement d'au moins deux modalités distinctes
- détection, pour chaque entrée modale, d'un changement d'état discret de l'entrée modale depuis un état discret précédemment attribué vers un état discret en cours nouvellement attribué à l'entrée modale, et détermination de données caractéristiques d'un état discret en cours de l'entrée modale suite au changement d'état détecté ;
- détection d'une requête de l'utilisateur à partir d'au moins une des entrées modales ;
la méthode comprenant, à chaque changement d'état détecté d'une des entrées modales, le stockage et la mise à jour des données caractéristiques de l'état discret en cours de l'entrée modale suite au changement d'état détecté ;
la méthode comprenant, à chaque requête de l'utilisateur détectée, la détermination de si ladite requête est suffisamment complète pour être mise en oeuvre, et, en cas de requête incomplète, la requête incomplète est alors complétée à partir d'au moins une des données caractéristiques à jour stockées de l'état discret en cours d'une autre entrée modale distincte de chaque entrée modale à partir de laquelle la requête a été détectée.
